# EUROPEAN PATENT SPECIFICATION

(11) **EP 1 543 734 B1**
(45) Date of publication and mention of the grant of the patent: **31.03.2010**
(21) Application number: 03798434.1
(22) Date of filing: 22.09.2003
(51) Int. Cl.: A23L 1/29, A23L 1/304, A23L 1/305, A23L 2/00

(54) **GEL-FORM COMPOSITION FOR SUPPLYING PROTEIN AND CALCIUM**
GELF RMIGE ZUSAMMENSETZUNG F R DIE BEREITSTELLUNG VON PROTEIN UND CALCIUM
COMPOSITION SOUS FORME DE GEL

(30) Priority: 25.09.2002 JP 2002278408
(43) Date of publication of application: 22.06.2005
(73) Proprietor: OTSUKA PHARMACEUTICAL CO., LTD., Chiyoda-ku Tokyo 101-8535 (JP)
(72) Inventor: TAKAICHI, Akihisa, Naruto-shi, Tokushima 772-0051 (JP); OKAMOTO, Toshihiko, Tokushima-shi, Tokushima 779-3122 (JP); WATANABE, Yoshinari, Takasaki-shi, Gunma 370-0047 (JP); HIRATA, Keizaburo, Tokushima-shi, Tokushima 771-0117 (JP)
(74) Representative: HOFFMANN EITLE
(86) International application number: PCT/JP2003/012061
(87) International publication number: WO 2004/028279

(56) References cited:
- EP-A- 1 046 347
- WO-A1-01/01789
- US-A- 4 642 238

## Description

### TECHNICAL FIELD

The present invention relates to a gel composition for nutritional supplementation that has refreshing taste and contains protein and calcium in high concentrations and has an acidic pH.

### BACKGROUND ART

In recent years, people care more about health, weight management, diet, etc., and the number of people who join in activities such as jogging, cycling and mountaineering is increasing. Under such circumstances, a food composition that allows easy and convenient intake of good quality protein and calcium is desired for supplementing energy, increasing the amount of body protein such as in muscles and increasing the amount of calcium in the body.

In the meantime, there is anxiety with regard to the aging society in terms of the reduction of muscle mass and bone density with age and the increase of patients showing symptoms such as sarcopenia (muscular atrophy), or osteoporosis which tends to occur often in women. There is a need for a food composition that helps to prevent or ameliorate such problems.

Further, hospitals desire a food for providing supplementary good high protein and calcium that can be ingested in a simple and easy manner by patients in bed during postoperative convalescence, rehabilitation after fracture, convalescence from liver disease, convalescence from renal disease, etc.

Recently, several sorts of jellied drinks have been sold as a new form of food or beverage in the soft drink market. Jellied drinks are to be drunk after crushing solidified jelly by shaking or the like, and their unique softness, throatfeel and unusual interesting texture of the gel are attracting attention as matching the taste of modern people.

Such jellied drinks are adjusted to have an acidic pH like general soft drinks and have good keeping qualities but almost never contain protein, calcium and the like. Thus, the drinks do not have a composition that allows sufficient supplementation of protein or calcium.

The present inventors already developed a nutritive composition containing macronutrients in well-balanced proportions (Japanese Examined Patent Publication No. 083653/1994), and a highly viscous high-protein food composition for nutritional supplementation (Japanese Examined Patent Publication No. 102112/1995). However, various difficulties existed in converting these compositions into gel compositions with high concentrations of protein and calcium.

In the meantime, other scientists have developed a gel food for nutritional supplementation that is suitable for persons with swallowing difficulties and a production method thereof (WO99/34690). This gel food contains protein, fat and like essential nutrients in well-balanced proportions, has a refreshing acidic pH and is a gel food suitable for drinking and swallowable. However, the gel food is a complex gel of an isoelectric gel protein(gel produced from protein)and a gel made by gelling agents(thickening agents) such as pectin or xanthan gum. Therefore the gel has the following drawbacks. Since the gel is produced by the steps of protein coagulation (gelation), homogenization and gelation of the resulting emulsion using gelling agents, the protein gel, if poorly homogenized, adversely affects palatability. In addition, the gel degrades with time (e.g., is reduced in strength, partially collapses, releases water, etc.) as the pH of the gel food decreases with time during long-term storage. Therefore, the gel cannot remain in a uniform gel state suitable for eating and drinking (having moderate hardness and viscosity to allow easy ingestion) as attained immediately after production.

EP-A-1 046 347 relates to a gelatinous food product for supplying balanced nutrition, which is a gel of an emulsified mixture comprising a Saccaride, Lipid, Protein, an organic acid and a salt thereof, a gelling agent and water. The gel has a pH of 3.3 to 4 and is a composite of an isoelectric gel of the protein and a heat-soluble gel formed with a gelling agent.

WO 01/1789 A1 relates to a gelled nutritional composition comprising a protein source including gelled whey protein, a carbohydrate source, minerals, and vitamins.

US 4642238 A concerns a method for producing a mineral enriched protein composition comprising forming a hydrated gel of an alkaline earth metal salt, adding said hydrated gel to an aqueous slurry of an isolated vegetable protein material to form a mineral enriched protein composition, and dewatering said composition.

### DISCLOSURE OF THE INVENTION

The major object of the invention is to provide a gel composition for protein and calcium supplementation that contains protein and calcium in high concentrations, has a refreshing acidic pH and is in the form of a soft gel suitable for eating and drinking, and the gel state being stably maintained for a long period.

The present inventors carried out intensive research based on the assumption that a composition containing high concentrations of protein and calcium in the form of a jelly drink can provide a food or beverage that is highly suitable for eating and drinking and provides multinutrition supplementation, but encountered the following problems. When compositions containing protein in relatively high concentrations are adjusted to have a refreshing acidic pH like known jelly drinks, the compositions may not form a uniform gel due to protein coagulation, which results in a rough, coarse texture and results in reduced palatability. Beverages containing calcium in a high concentration have a high buffering effect and require large amounts of organic acids to change their pH into an acidic range and therefore have a strong acidic taste. In addition, such beverages have the astringent taste of calcium.

The present inventors carried out further intensive research and found that when certain components are incorporated in specific amounts, a gel composition for protein and calcium supplementation that achieves the above object can be obtained. The inventors carried out further intensive research and accomplished the present invention.

The present invention provides the following gel compositions:
1. A gel composition for protein and calcium supplementation comprising the following components and having a pH in the range of 3 to 4:
Protein or its hydrolysate that does not coagulate at

| | |
|---|---|
| pH 3 to pH 4 | 3 - 8 wt.% |
| Calcium | 0.1 - 0.5 wt.% |
| Acidulant | 0.5 - 3 wt.% |
| Carbohydrate | 4 - 20 wt.% |
| Fat | 0 - 5 wt.% |
| Emulsifying agent | 0 - 0.5 wt.% |
| Agar | 0.1 - 1 wt.% |
| Water | 65 - 90 wt.% |

2. The gel composition according to item 1, further comprising 0.1 to 20 wt.% of at least one masking agent selected from the group consisting of fruit juice, fermented milk, hard-to-digest dextrin, reduced hard-to-digest dextrin, nigerooligosaccharide and trehalose.
3. The gel composition according to item 1 or 2, further comprising vitamin D in an amount of 0.1 x 10⁻⁶ to 10 x 10⁻⁶ wt.%.
4. The gel composition according to any of items 1 to 3, wherein the protein that does not coagulate at pH 3 to pH 4 is at least one member selected from the group consisting of whey protein concentrates, whey protein isolates, desalted whey, and protein hydrolysates having a number average molecular weight of 500 to 10000.

In this specification, "%" indicates "weight %", unless otherwise specified.

The gel composition for protein and calcium supplementation of this invention is in the form of a soft gel especially suitable for drinking and has a refreshing mouthfeel, the gel form and mouthfeel being stably maintained for a long period.

The gel composition of the invention has such fluidity, for example, in case that the composition contained in a container with a mouthpiece, can be easily drunk or eaten through the mouthpiece. In addition, the composition has a moderate hardness and viscosity that can provide pleasant palatability and throatfeel.

The gel composition of the invention has a refreshing mouthfeel, based on the combined use of specific components and pH adjustment to the acidic range of pH 3 to pH 4, preferably pH 3.5 to pH 4.

The gel form and mouthfeel of the composition of the invention are stably maintained for a long period. For example, the composition after being left for 1 month at 37°C has substantially the same levels of pH and gel form as immediately after production.

Furthermore, the gel composition of the invention, although containing high concentrations of protein and calcium, is free of problems such as graininess and roughness caused by protein aggregation or coagulation, lacks an astringent calcium taste, and is suitable for drinking and has an excellent mouthfeel. In addition, the appearance of the composition is smooth and uniform.

The gel composition of the invention contains abundant well balanced nutrients essential to the human body such as protein, calcium, carbohydrate and fat, as described above. Therefore, the intake of the composition produces an excellent nutritional supportive effect.

The gel composition of the invention will be described below in more detail.

### Protein

The gel composition of the invention contains protein as an essential ingredient. Protein is one of the three major nutrients, along with carbohydrate and fat. The proteins to be used are selected from proteins that do not coagulate at the pH of the gel composition of the invention, i.e., pH 3 to pH 4. Examples of useful proteins include proteins such as whey protein concentrates (WPC), whey protein isolates (WPI) and desalted whey, and protein hydrolysates having a number average molecular weight of 500 to 10000 (peptides, which may contain amino acids as a part). Among the above proteins, WPC, WPI and gelatin peptide are preferable.

WPC and WPI are whey products obtained by subjecting liquid whey, which is a by-product produced during the production of milk products such as cheese and casein, to operations such as filtration, ion exchange, crystallization, precipitation and/or reverse osmosis. Although there are slight differences depending on the manufacturer, their various physical properties, including their protein composition, are approximately as shown in Table 1 (see New Food Industry, 25 (3), 33 (1983), etc.).

**Table 1**

| | WPC-34 | WPC-50 | WPC-60 | WPC-75 | WPC-80 | WPI |
|---|---|---|---|---|---|---|
| Protein | 34-36 | 50-52 | 60-62 | 75-78 | 80-82 | 90-92 |
| α-lactoglobulin | 6.5 | 9.5 | 11 | 14 | 15 | 21 |
| β-lactoglobulin | 16 | 24 | 29 | 36 | 38 | 47 |
| Serum albumin | 1.7 | 2.5 | 3.0 | 3.8 | 4.0 | 1.5 |
| Immunoglobulin | 2.7 | 4.0 | 4.8 | 6.0 | 6.4 | 2.4 |
| Lactose | 48-52 | 33-37 | 25-30 | 10-15 | 4-8 | 0.5-1 |
| Fat | 3-4.5 | 5-6 | 1-7 | 4-9 | 4-8 | 0.5-1 |
| Ash | 6.5-8.0 | 4.5-5.5 | 4-6 | 4-6 | 3-4 | 2-3 |
| Water | 3.0-4.5 | 3.5-4.5 | 3-5 | 3-5 | 3.5-4.5 | 4.5 |
| PH | 6-6.7 | 6-6.7 | 6-6.7 | 6-6.7 | 6-6.7 | 6-6.7 |

Desalted whey is obtained by pasteurizing whey at a low temperature and removing therefrom minerals by precipitation, filtration, dialysis or other separation techniques. Normally, it contains 79% carbohydrate, 2% fat, 13% protein and less than 7% ash.

When WPC, WPI or desalted whey is used, the proportion of protein in the gel composition of the invention is indicated by the amount of protein in the WPC, WPI or desalted whey.

Examples of protein hydrolysates having a number average molecular weight of about 500-10000 include peptides obtained by hydrolyzing proteins which do not coagulate at pH 3-4 or proteins such as casein, gelatin, soybean protein and wheat protein with enzymes or acids to the molecular weight mentioned above. They usually contain peptides wherein up to 100 amino acids are connected by peptide linkages. Amino acids may also be included as a part of the protein hydrolysates.

Proteins that do not coagulate at pH 3 to pH 4, as exemplified above, may be used singly or in combination of two or more, as the protein of the invention.

The proportion of protein in the gel composition of the invention is preferably in the range of 3 to 8 wt.%, and more preferably about 4 to about 7 wt.%.

Incorporation of protein in the above proportional range provides a nutritionally balanced composition that allows efficient protein supplementation.

In the invention, if necessary, the composition of the invention may contain protein which coagulate at an acidic range, in addition to protein which do not coagulate at pH 3-4.

Specific examples of proteins that coagulate in the acidic range include casein, soy protein, and wheat protein . Salts, fermented products, extracts or condensates of casein, soy protein or wheat protein are also usable. Whole milk powders, skim milk powders and the like are also usable. Among the above proteins, fermented protein products such as yogurt and cheese are preferable. These proteins can be used singly or in combination of two or more.

The combined use of protein that does not coagulate at pH 3 to pH 4 and protein that coagulates in the acidic range can adjust the balance of protein content and improve taste.

It should be understood that the amount of protein which coagulate at acidic pH added to the composition of the invention needs to be such that the characteristics of the composition of the invention such as gel form and texture (feel to the tongue) are not impaired. A suitable amount of the protein which coagulate at acidic pH is less than 1 wt.%, in the gel composition of the invention.

### Calcium

The gel composition of the invention contains calcium as an essential ingredient. Calcium is needed for the formation of bone and teeth and maintains normal blood calcium levels and the health of bones and teeth. In addition, calcium is an important nutritional component that smoothly activates the functions of the blood, heart and muscles and sufficient intake is required. In particular, modern people have been pointed out a poor intake of calcium through meals and their calcium supplementation is strongly desired.

However, since beverages containing calcium in a high concentration have a strong buffering effect and require large amounts of organic acids to change their pH into the acidic range, conventional beverages have a strong acidic taste and also the astringent taste of calcium.

The present invention achieves the suppression of acidic taste and astringent taste by selecting the calcium material and other components and setting their proportions in a specific range.

Examples of raw materials to be incorporated as calcium-containing substances in the gel composition include natural calcium materials and synthetic calcium materials.

Examples of natural calcium materials include milk calcium, shell calcium, coral calcium, eggshell calcium, bone calcium, and dolomite.

Examples of synthetic calcium materials include calcium chloride, calcium lactate, calcium citrate, calcium carbonate, calcium pyrophosphate dihydrate, and calcium gluconate .

Natural calcium materials are particularly preferable in view of their good taste and texture (mouthfeel).

The proportion of calcium in the gel composition is preferably in the range of 0.1 to 0.5 wt.%, and more preferably 0.1 to 0.4 wt.%. The incorporation of calcium in the above proportional range provides a nutritionally balanced composition that achieves efficient calcium supplementation.

The proportion of calcium in the invention is indicated by the amount of calcium in the calcium material.

### Acidulant

Acidulants are incorporated in the gel composition of the invention to adjust the pH to the range of 3 to 4, preferably 3.5 to 4. It is preferable to use as acidulants at least two kinds of acidic components selected from the group consisting of citric acid, ascorbic acid, tartaric acid, succinic acid, malic acid, gluconic acid, phosphoric acid, phytic acid and lactic acid. Citric acid can be used in the form of trisodium citrate.

The proportion of acidulant in the gel composition of the invention is preferably in the range of 0.5 to 3 wt.%, and more preferably 0.5 to 2 wt.%. The incorporation of acidulant in the above proportional range improves mouthfeel (texture) as desired and achieves pH adjustment or buffer function.

The pH of the gel composition described in this specification is the pH value determined by the glass electrode method.

### Carbohydrate

The gel composition of the invention contains carbohydrate as an essential ingredient. Carbohydrate is one of the three major nutrients and is stored as glycogen in the liver and muscles and consumed as an energy source when exercising, etc.

The carbohydrate to be used can be selected from general carbohydrate conventionally used in this type of composition for nutritional supplementation. Specific examples of carbohydrate include monosaccharides such as glucose and fructose; disaccharides such as maltose and sucrose; sugar alcohols such as xylitol, sorbitol, glycerin and erythritol; polysaccharides such as dextrin and cyclodextrin; oligosaccharides such as fructooligosaccharide and galactooligosaccharide.

These carbohydrates can be used singly or in combination of two or more.

When two or more carbohydrates are used in combination, commercially available carbohydrate mixtures, for example, isomerized sugar, purified sucrose and the like are of course usable.

Usable carbohydrates include those serving not only as nutrients but also as sweeteners, such as sucrose. Carbohydrates serving as sweeteners are preferably used, because they impart sweetness to the gel composition.

The proportion of carbohydrate in the gel composition is preferably in the range of 4 to 20 wt.%, preferably 4 to 18 wt.%, and more preferably 5 to 16 wt.%.

The use of carbohydrate in the above proportional range provides a nutritionally balanced composition that achieves adequate carbohydrate supplementation.

### Fat

The gel composition of the invention may contain fat for nutritional supplement. Fats serve as substitute energy sources for carbohydrates during, for example, long-term physical exercise.

Examples of fats include long-chain fatty acid triglyceride (LCT) as sources of essential fatty acids, medium-chain fatty acid triglyceride (MCT) and the like.

Usually LCT is a triglyceride of fatty acids having 11 or more carbon atoms, including, for example, soybean oil, cottonseed oil, safflower oil, corn oil, rice oil, coconut oil, basil oil, sesame oil, linseed oil and like vegetable oils, sardine oil, cod liver oil and like fish oils, toad oil and the like.

Usually MCT is a triglyceride of fatty acids having 8 to 10 carbon atoms and includes, for example, caprylic acid, capric acid, lauric acid and the like. MCT is characterized by easy absorption, easy combustion and low accumulation.

LCT and MCT may be used singly or as a mixture of two or more LCTs, a mixture of two or more MCTs or a mixture of LCT and MCT.

The proportion of fat in the gel composition is 0 to 5 wt.%, preferably 0 to 3 wt.%, and more preferably 0.1 to 3 wt.%.

The incorporation of fat in the above proportional range provides a composition that achieves balanced nutritional supplementation.

### Emulsifying agent

Fats are soluble in oil but sparingly soluble in water, and thus in the present invention are usually used in the form of an oil-in-water emulsion. For producing the composition of the invention containing fat, it is therefore necessary to use an emulsifying agent in order to emulsify the fat.

The emulsifying agent can be suitably selected from those heretofore used in the field of beverage and food products. Considering that the composition of the invention is adjusted to the specified acidic pH, it is preferable that selection be made from emulsifying agents having acid resistance.

Typical examples of emulsifying agents are glycerol fatty acid ester compounds. Examples of useful glycerol fatty acid ester compounds include various compounds known as emulsifying agents in the field of food products. For example, any of emulsifying agents categorized into highly purified monoglycerides, reactive monoglycerides highly purified fatty acid monoesters of diglycerine, and polyglycerine esters can be used.

Specific examples include commercially available "Sunsoft" (trademark, manufactured by TAIYO KAGAKU CO.,LTD.), "Emulsy" (trademark, manufactured by RIKEN VITAMIN CO.,LTD.) and "Ryoto" (trademark, manufactured by MITSUBISHI-KAGAKU FOOD CORPORATION).

Emulsifying agents other than glycerol fatty acid ester compounds can be used in the present invention, if such emulsifying agents are used in the field of food products.

Examples include phospholipids such as egg yolk lecithin, hydrogenated egg yolk lecithin, soybean lecithin and hydrogenated soybean lecithin; synthetic surfactants such as polyoxyethylene monooleate (e.g., commercially available product "Tween 80" manufactured by AMR), sucrose fatty acid esters, sorbitan fatty acid esters, and propylene glycol fatty acid esters

The emulsifying agents can be used singly or in combination of two or more. The combined use of two or more emulsifying agents is usually preferable.

The proportion of emulsifying agents in the gel composition is preferably 0 to 0.5 wt.%, and more preferably 0 to : 0.3 wt.%.

When the gel composition of the invention is produced by preparing in advance an emulsion or dispersion mixture of protein, citric acid and other acidic components, the proportion of emulsifying agents in the mixture is preferably in the range of 1 to 5%, and more preferably 3 to 5%.

### Agar

The gel composition of the invention contains agar as an essential gelling agent. It is difficult to gelate beverages containing high concentrations of protein and calcium by using generally used cation-reactive gelling agents, such as gellan gum and carrageenan. However, by using a non-reactive gelling agents such as agar, good refreshing gel foods can be obtained.

Any agar which is prepared from red algae with hot water extraction, solidifying and drying the extract is useful. Red algae include Tengusa (Gelidium amansii), Ogonori (Gracilaria verrucosa), Obakusa (Pterocladia tenuis) and Itanikusa (Ahnfeltia plicata). Such agar includes agar strings, agar stick, agar flakes, and agar powders .

The proportion of agar in the composition is preferably 0.1 to 1 wt.%, and more preferably 0.2 to 0.8 wt.%.

The use of agar in the above proportional range provides a gel composition that is homogenous and highly suitable for drinking or eating, which is an object of the present invention.

### Other gelling agents or thickening agents

The composition of the invention, if necessary, may contain, along with agar, various substances heretofore used as gelling agents and/or thickening agents in the field of food products.

Examples of gelling agents include gellan gum, carrageenan, pectin, gelatin and the like.

Examples of thickening agents include furcellaran, locust bean gum, guar gum, gum Arabic, and xanthan gum

Among the above gelling agents, gellan gum, carrageenan, pectin and gelatin are preferable and gellan gum is particularly preferable. Among the above thickening agents, locust bean gum, guar gum and xanthan gum are preferable and guar gum is particularly preferable.

The gelling agents and thickening agents can be used singly or in combination of two or more.

Such gelling agents and/or thickening agents exhibit an appropriate gelling ability and gel stabilizing ability and control the gel strength of the resulting gel. In addition, when used in combination with agar, they can also mitigate water release and improve the texture of the resulting gel. The combined use of agar and guar gum or agar and gellan gum is particularly preferable with regard to excellent mouthfeel (texture).

Each the gelling agent and the thickening agent is added to the gel composition of the invention preferably in an amount ranging from 0.05-0.3 wt.%. For example, when guar gum or gellan gum is used in combination with agar, the proportion of guar gum or gellan gum in the gel composition of the invention is preferably 0.05 to 0.3 wt.%.

### Masking agent

Preferably, the gel composition of the invention further contains a masking agent to suppress the bad taste and flavor caused by high concentrations of protein and calcium.

Examples of masking agents include fruit juice, fermented milk, hard-to-digest dextrin, reduced hard-to-digest dextrin, nigerooligosaccharide and trehalose.

Among the above masking agents, fruit juice, hard-to-digest dextrin and reduced hard-to-digest dextrin are particularly preferable to achieve an excellent masking effect.

The proportion of masking agent in the gel composition is preferably 0.1 to 20 wt.%, and more preferably 0.5 to 15 wt.%. The use of a masking agent in the above proportional range is highly effective in ameliorating the astringent taste of calcium.

### Vitamin D

In the invention, vitamin D is preferably incorporated to enhance calcium absorption. The combined use of calcium and vitamin D produces significant effects such as enhancement of calcium absorption in the intestinal tract and elevation of blood calcium concentration.

Vitamin D includes vitamin D₂ and vitamin D₃, which are different in side chain structure. Both forms of vitamin can be used as the vitamin D in the invention.

The proportion of vitamin D in the composition is preferably in the range of 0.1 x 10⁻⁶ wt.% to 10 x 10⁻⁶ wt.%, and more preferably 0.3 x 10⁻⁶ wt.% to 5 x 10⁻⁶ wt.%. The use of vitamin D in the above proportional range is highly effective in enhancing calcium absorption in the intestinal tract and strengthening bones.

### Other additives

The gel composition of the invention may, if desired, further contain appropriate additives in addition to the above components.

Examples of such additives include sweeteners such as natural sweeteners (other than carbohydrates) and artificial sweeteners, vitamins, minerals (electrolytes and trace elements), flavoring agents such as natural flavors, synthetic flavors, coloring agents, flavoring materials (chocolate, etc.), food preservatives, natural fruit juices, and natural fruit fleshes

Examples of natural sweeteners (non-carbohydrate) include thaumatin, stevia extract (rebaudioside A, etc.), glycyrrhizin, and the like. Examples of artificial sweeteners include saccharin, aspartame and the like. When a sweetener is added to supplement any insufficient sweetness provided by the addition of carbohydrate in the specified amount, the proportion of sweetener is preferably 0.01 to 0.2%, and more preferably 0.02 to 0.1%, relative to the total weight of the composition.

Examples of vitamins include water-soluble and fat-soluble vitamins such as vitamin A (retinols), vitamin B₁ (thiamine), vitamin B₂ (riboflavin), vitamin B₆ (pyridoxine), vitamin B₁₂ (cyanocobalamin), vitamin E (tocopherol), niacin, bisbentiamine, nicotinamide, calcium pantothenate, folic acid, biotin, and choline bitartrate

Examples of particularly preferable vitamins include a multivitamin (hereinafter referred to as "multivitamin 1") of the following components:

| | |
|---|---|
| Vitamin A | 10-2000 IU |
| Vitamin B₁ | 0.01-3.0 mg |
| Vitamin B₂ | 0.01-3.1 mg |
| Vitamin B₆ | 0.01-3.2 mg |
| Vitamin B₁₂ | 0.1-30 µg |
| Vitamin E | 1-100 IU |
| Nicotinamide | 0.1-30 mg |
| Calcium pantothemate | 0.1-31 mg |
| Folic acid | 0.01-3.0 mg |

The multivitamin may further contain 1 to 500 mg of vitamin C.

Examples of minerals (electrolytes and trace elements) include known minerals such as sodium chloride, sodium acetate, magnesium sulfate, magnesium chloride, dipotassium phosphate, monosodium phosphate, ferric citrate, ferrous pyrophosphate, ferric pyrophosphate, iron and sodium succinatocitrate, manganese sulfate, cupric sulfate, zinc sulfate, sodium iodide, potassium sorbate, zinc, manganese, copper, iodine, and cobalt.

Examples of flavoring agents include apple flavors, orange flavors, grapefruit flavors, and lemon flavors . These flavoring agents include natural and synthetic flavors.

Examples of coloring agents include Red No.2, Red No.3, Green No.3, Blue No.1, Blue No.2, Yellow No.4, Yellow No.5, red cabbage color, orange pigment, gardenia pigment, chlorophyll, Perilla color, tomato pigment, and safflower pigment

Examples of flavoring materials include chocolate.

Examples of food preservatives include butyl hydroxyanisole (BHA), dibutylhydroxytoluene (BHT), sodium nitrate, sodium nitrite, disodium ethylenediaminetetraacetate (EDTA), tert-butylhydroquinone (TBHQ), benzoic acid, Japanese styrax benzoin extract, rumput roman extract, hinokitiol extract, pectin digests, Magnolia obovata extract, and forsythia extract.

Examples of natural fruit juices and natural fruit fleshes include those of apples, green apples, oranges, mandarin oranges, grapefruits, peaches, strawberries, muscats, grapes, pineapples, lemons, pears, litchis, blueberries, mangos, and bananas.

The addition of vitamins and minerals is particularly preferable for comprehensive nutritional supplementation.

The above additives can be used singly or in combination of two or more in the gel composition of the invention.

Although the proportions of additives in the gel composition are not particularly limited, the additives are usually used in such an amount that the total amount of additives is less than 2 parts by weight per 100 parts by weight of the gel composition.

### Method of producing the gel composition

The gel composition of the invention is prepared by mixing and emulsifying the specified amount of the components mentioned above with the specific amount of water with heating and then cooling the mixture. Such emulsification can be conducted by adding all the components to water at once and then lightly carrying out a mechanical operation such as stirring. Alternatively, it can be conducted by preliminarily preparing an aqueous solution of the water-soluble components, adding to the solution the oil-soluble components and an emulsifying agent or a mixture thereof and subjecting them to a similar mechanical operation such as stirring. Generally, the latter is preferable to obtain a more uniformly emulsified mixture.

The above mixing operation (emulsification operation) can be performed at room temperature, but is preferably performed while heating at 30 to 60°C.

The emulsifying operation can be conducted in a known manner with a suitable emulsifier, for example, homomixer, high-pressure homogenizer or the like. The emulsifying operation can be conducted by complete passage process or circulation process.

For example, the following preferable method can be used to prepare the gel composition of the invention. To a mixture (dispersion) of protein materials, citric acid and water are added fat, emulsifying agent, carbohydrate, calcium material, and other additive components. The obtained emulsion is heated to about 60°C. The emulsion is then mixed with a solution prepared by dissolving agar and other gelling agents or thickening agents under heating in water which had been previously heated to about 80°C.

The desired gel drink product is obtainable by cooling the emulsion obtained above, preferably by placing in a suitable container, sterilizing and cooling.

Suitable containers are any of those made of plastics and used as storage containers for this type of products. Examples of container materials include polyethylene, polypropylene, stretched polyamide, polyethylene terephthalate, Eval (ethylene vinyl alcohol copolymer resin, product of KURARAY CO.,LTD.) and composite materials produced by laminating these resins and aluminum, paper or the like. Examples of commercially available containers include Soft Pouch (manufactured by FUJI SEAL, INC.), Bottled Pouch (manufactured by TOPPAN PRINTING CO., LTD.), Spouch (manufactured by DAI NIPPON PRINTING CO.,LTD.) and Cheerpack (manufactured by HOSOKAWA YOKO CO., LTD.).

Sterilization can be performed in a known manner such as by heating. In this case, sterilization also serves as heating and thus makes preceding heating unnecessary.

The gel composition thus obtained is highly suitable for eating or drinking and safely ingestable. In addition, ingesting the gel composition provides sufficient protein and calcium supplementation and well balanced nutritional supplementation.

### BEST MODE FOR CARRYING OUT THE INVENTION

The following examples are provided to illustrate the present invention in further detail. In the examples, parts and percentages are all by weight unless otherwise specified.

### Examples 1 to 10

The specified amounts of the components shown in Tables 2 and 3 below were added to water together with appropriate amounts of other components, i.e., pineapple juice, multivitamin 1 and pineapple flavor and mixed and stirred to make a total weight of 180 g. After emulsifying the mixture, the emulsion was heated to 80°C, packed in a Spouch (manufactured by Dai Nippon Printing Co., Ltd.), and sterilized by heating at 80°C for 10 minutes and cooled to provide a pouched gel beverage product of the invention.

The protein components used in Tables 2 and 3 are as follows:
WPI; WPI shown in Table 1
WPC; WPC-80 shown in Table 1
Gelatin peptide; obtained by hydrolysis of gelatin and having the number average molecular weight to about 3,000 to about 4,000 and a pH of 5.0 to 6.5 in aqueous solution

Energy was calculated by the following equation: (4 kcal x carbohydrate content) + (9 kcal x fat content) + (4 kcal x protein content). In Table 2 and 3, energy is shown as kcal per 100 g of sample.

**Table 2**

| **Component (%)** | **Example** | | | | |
|---|---|---|---|---|---|
| | **1** | **2** | **3** | **4** | **5** |
| **Protein material** | | | | | |
| **WPC** | - | **7.0** | **4.0** | **2.0** | **3.0** |
| **WPI** | **7.0** | - | **3.0** | **2.0** | - |
| **Gelatin peptide** | - | - | - | - | **1.5** |
| **Calcium material** | | | | | |
| **Calcium lactate** | - | - | **1.0** | - | - |
| **Calcium gluconate** | **1.7** | - | - | **0.2** | **0.1** |
| **Shell calcium** | - | **0.5** | - | **0.3** | - |
| **Milk calcium** | - | - | - | - | **0.3** |
| **Acidulant** | | | | | |
| **Citric acid** | **2.0** | **1.5** | **1.0** | **0.5** | **0.5** |
| **Lactic acid** | - | **0.5** | **1.0** | - | - |
| **Gluconic acid** | - | - | - | **1.0** | - |
| **Phosphoric acid** | - | - | - | - | **0.5** |
| **Masking component** | | | | | |
| **Fruit juice** | **1.0** | **1.0** | **2.0** | **2.0** | **2.0** |
| **Reduced hard-to-digest dextrin** | - | - | - | - | **0.5** |
| **Nigerooligosaccharide** | - | - | - | - | - |
| **Trehalose** | - | - | - | **0.2** | - |
| **Thickening agents/gelling agents** | | | | | |
| **Agar** | **0.3** | **0.3** | **0.3** | **0.4** | **0.4** |
| **Guar gum** | **0.1** | - | - | - | **0.1** |
| **Locust bean gum** | - | **0.1** | - | - | - |
| **Xanthan gum** | - | - | **0.1** | - | - |
| **Carbohydrate material** | | | | | |
| **Sugar** | - | **5** | **8** | **4** | **3** |
| **Oligosaccharide** | **4** | **10** | **10** | - | **11** |
| **Sucralose** | **0.05** | - | - | **0.03** | - |
| **Fat material** | | | | | |
| **Corn oil** | - | - | - | **0.5** | **0.3** |
| **Soybean oil** | - | **0.7** | **0.3** | - | - |
| **Emulsifying agent** | | | | | |
| **Glycerol fatty acid ester** | - | **0.02** | **0.01** | **0.02** | **0.01** |
| **Trace component** | | | | | |
| **Vitamin D₃ oil** | - | **0.002** | **0.002** | **0.002** | **0.002** |
| **Ascorbic acid** | - | **0.2** | **0.1** | **0.05** | **0.05** |
| **Water** | **88** | **75** | **70** | **88** | **78** |
| **Energy (kcal / 100g)** | **80** | **160** | **170** | **80** | **150** |
| **pH** | **3.95** | **3.90** | **3.91** | **3.92** | **3.80** |
| **Protein (%)** | **6.7** | **5.7** | **6.0** | **4.2** | **4.7** |
| **Calcium content (mg%)** | **200** | **170** | **170** | **110** | **110** |
| **Vitamin D content (µg%)** | - | **1.0** | **1.5** | **1.8** | **1.8** |

**Table 3**

| **Component (%)** | **Example** | | | | |
|---|---|---|---|---|---|
| | **6** | **7** | **8** | **9** | **10** |
| **Protein material** | | | | | |
| **WPC** | - | **4.0** | **1.0** | **3.0** | **3.5** |
| **WPI** | **3.0** | - | **1.5** | - | - |
| **Gelatin peptide** | **3.0** | **1.5** | **3.0** | **5.0** | **2.5** |
| **Calcium material** | | | | | |
| **Calcium lactate** | **0.6** | - | - | - | - |
| **Calcium gluconate** | **0.2** | - | **0.1** | **0.1** | **0.2** |
| **Milk calcium** | - | **0.4** | **0.4** | **0.4** | **0.5** |
| **Acidulant** | | | | | |
| **Citric acid** | **0.7** | **0.5** | **0.6** | **0.8** | **0.8** |
| **Lactic acid** | - | - | **0.5** | - | **0.5** |
| **Gluconic acid** | - | **0.3** | - | **0.5** | - |
| **Phosphoric acid** | **0.5** | **0.4** | **0.5** | **0.5** | **0.8** |
| **Masking component** | | | | | |
| **Fruit juice** | **1.5** | **1.0** | **1.5** | **2.0** | **2.0** |
| **Reduced hard-to-digest dextrin** | **1.0** | **0.5** | - | - | - |
| **Nigerooligosaccharide** | - | - | **1.0** | - | **0.5** |
| **Trehalose** | - | - | - | **1.0** | - |
| **Thickening agents/gelling agents** | | | | | |
| **Agar** | **0.3** | **0.3** | **0.3** | **0.4** | **0.4** |
| **Gellan gum** | **0.1** | **0.1** | - | - | **0.1** |
| **Carrageenan** | - | - | **0.1** | - | - |
| **Pectin** | - | - | - | **0.1** | - |
| **Carbohydrate material** | | | | | |
| **Sugar** | **5** | **10** | **12** | **9** | **10** |
| **Oligosaccharide** | **7** | - | - | - | - |
| **Dextrin** | - | **2** | - | **5** | **3** |
| **Fat material** | | | | | |
| **Com oil** | - | - | **0.3** | **1.0** | - |
| **Soybean oil** | **0.3** | **0.3** | - | - | **0.5** |
| **Emulsifying agent** | | | | | |
| **Glycerol fatty acid ester** | **0.01** | **0.02** | **0.01** | **0.05** | **0.02** |
| **Trace component** | | | | | |
| **Vitamin D₃ oil** | **0.003** | **0.002** | **0.003** | **0.002** | **0.002** |
| **Water** | **78** | **71** | **76** | **70** | **75** |
| **Energy (kcal / 100g)** | **150** | **175** | **170** | **200** | **175** |
| **pH** | **3.80** | **3.80** | **3.82** | **3.80** | **3.80** |
| **Protein (%)** | **5.5** | **5.5** | **5.5** | **8.3** | **5.5** |
| **Calcium content (mg%)** | **110** | **140** | **150** | **140** | **170** |
| **Vitamin D content (µg%)** | **3.2** | **3.7** | **3.1** | **2.4** | **2.1** |

All the gel compositions of the invention obtained above had a uniform appearance and smooth surface and were in a soft gel state.

Further, the gel compositions obtained in Examples 1 to 10 were tasted and evaluated for their mouthfeel by well trained panelists. Table 4 shows the evaluation results.

**Table 4**

| **Gel composition** | **Mouthfeel evaluation** |
|---|---|
| **Example 1** | **Excellent** |
| **Example 2** | **Good** |
| **Example 3** | **Good** |
| **Example 4** | **Good** |
| **Example 5** | **Excellent** |
| **Example 6** | **Excellent** |
| **Example 7** | **Excellent** |
| **Example 8** | **Good** |
| **Example 9** | **Good** |
| **Example 10** | **Excellent** |

As shown in Table 4, the results clearly show that the gel compositions of the invention have superior mouthfeel (texture).

### Test Examples

Gel compositions 1 to 11 were prepared in the same manner as in Example 1 except that the masking components were changed to those shown in Table 5.

The compositions were tasted by ten panelists and sensorily evaluated for their effectiveness in masking the astringent taste of calcium, based on the following criteria:
- 5 points:: having substantially no calcium taste
- 4 points:: having a slight residual calcium taste
- 3 points:: having calcium taste but at an acceptable level
- 2 points:: having calcium taste; hesitancy in drinking
- 1 point:: having a strong calcium taste; unsuitable for drinking

Table 5 shows the evaluation results. The total evaluation points assigned by the panelists are shown in the column "Sensory evaluation".

**Table 5**

| **Gel composition** | **Masking component** | **Proportion (%)** | **Sensory evaluation** |
|---|---|---|---|
| **1** | **Nothing** | **-** | **24** |
| **2** | **Nigerooligosaccharide** | **0.5** | **30** |
| **3** | **Nigerooligosaccharide** | **1.0** | **35** |
| **4** | **Nigerooligosaccharide** | **2.0** | **36** |
| **5** | **Trehalose** | **0.5** | **28** |
| **6** | **Trehalose** | **1.0** | **32** |
| **7** | **Trehalose** | **2.0** | **33** |
| **8** | **Hard-to-digest dextrin** | **0.5** | **45** |
| **9** | **Hard-to-digest dextrin** | **1.0** | **44** |
| **10** | **Reduced hard-to-digest dextrin** | **0.5** | **45** |
| **11** | **Reduced hard-to-digest dextrin** | **1.0** | **47** |

As shown in Table 5, the results clearly show that the masking agents (components) significantly suppressed the astringent taste of calcium in the gel compositions of the invention.

### INDUSTRIAL APPLICABILITY

The gel composition of the invention can be eaten or drunk safely and is highly suitably for eating and drinking. Ingestion of the gel composition provides sufficient supplementation of protein and calcium.

The gel composition for protein and calcium supplementation of the invention is in the form of a soft gel suitable for drinking or eating and has a refreshing mouthfeel, the gel form and mouthfeel being stably maintained for a long period.

The gel composition of the invention, although containing protein and calcium in high concentrations, are free of problems such as graininess and roughness caused by protein aggregation or coagulation, lacks an astringent calcium taste, and is highly suitable for drinking or eating with an excellent mouthfeel. The composition is smooth and uniform in appearance.

In addition, since the gel composition of the invention contains abundant well balanced nutrients essential to the human body such as protein, calcium, carbohydrate and fat, the composition has excellent nutritional supplementary effect.

Further, the gel composition of the invention can be ingested easily and conveniently and is suitable for use by athletes who want quick nutritional supplementation during physical exercise or by patients in bed in need of nutritional supplementation. In addition, the uptake of the composition of the invention, in combination with physical exercise, is effective in strengthening muscles and bones.

## Claims

1. A gel composition for protein and calcium supplementation comprising the following components and having a pH in the range of 3 to 4:
**Protein or its hydrolysate that does not coagulate at**
| | |
|---|---|
| pH 3 to pH 4 | 3 - 8 wt.% |
| Calcium | 0.1 - 0.5 wt.% |
| Acidulant | 0.5 - 3 wt.% |
| Carbohydrate | 4 - 20 wt.% |
| Fat | 0 - 5 wt.% |
| Emulsifying agent | 0 - 0.5 wt.% |
| Agar | 0.1 - 1 wt.% |
| Water | 65 - 90 wt.% |

2. The gel composition according to claim 1, further comprising 0.1 to 20 wt.% of at least one masking agent selected from the group consisting of fruit juice, fermented milk, hard-to-digest dextrin, reduced hard-to-digest dextrin, nigerooligosaccharide and trehalose.

3. The gel composition according to claim 1 or 2, further comprising vitamin D in an amount of 0.1 x 10⁻⁶ to 10 x 10⁻⁶ wt.%.

4. The gel composition according to any of claims 1 to 3, wherein the protein that does not coagulate at pH 3 to pH 4 is at least one member selected from the group consisting of whey protein concentrates, whey protein isolates, desalted whey, and protein hydrolysates having a number average molecular weight of 500 to 10000.

5. The gel composition according to any of the claims 1 to 4, further comprising guar gum or gellan gum in an amount of 0.05 to 0.3 wt.%.

## Patentansprüche

1. Gelzusammensetzung zur Protein- und Kalziumergänzung, die einen pH-Wert im Bereich von 3 bis 4 aufweist und folgende Komponenten umfasst:
**Protein oder dessen Hydrolysat, das bei einem pH-Wert**
| | |
|---|---|
| von 3 bis 4 nicht koaguliert | 3 bis 8 Gew.% |
| Kalzium | 0,1 bis 0,5 Gew.% |
| Säuerungsmittel | 0,5 bis 3 Gew.% |
| Kohlenhydrat | 4 bis 20 Gew.% |
| Fett | 0 bis 5 Gew.% |
| Emulgator | 0 bis 0,5 Gew.% |
| Agar | 0,1 bis 1 Gew.% |
| Wasser | 65 bis 90 Gew.% |

2. Gelzusammensetzung gemäß Anspruch 1, die ferner 0,1 bis 20 Gew.% eines Maskierungsmittels umfasst, ausgewählt aus der Gruppe bestehend aus Fruchtsaft, fermentierter Milch, schwer verdaulichem Dextrin, reduziertem schwer verdaulichem Dextrin, Nigerooligosaccharid und Trehalose.

3. Gelzusammensetzung gemäß Anspruch 1 oder Anspruch 2, die ferner Vitamin D in einer Menge von 0,1 x 10⁻⁶ bis 10 x 10⁻⁶ Gew.% umfasst.

4. Gelzusammensetzung gemäß irgendeinem der Ansprüche 1 bis 3, wobei das Protein, das bei einem pH-Wert von 3 bis 4 nicht koaguliert, mindestens eines ist, ausgewählt aus Molkeproteinkonzentraten, Molkeproteinisolaten, entsalzter Molke und Proteinhydrolysaten, mit einem zahlengemittelten Molekulargewicht von 500 bis 10.000.

5. Gelzusammensetzung gemäß irgendeinem der Ansprüche 1 bis 4, die ferner Guarkernmehl oder Gellan in einer Menge von 0,05 bis 0,3 Gew.% umfasst.

## Revendications

1. Composition sous forme de gel pour supplémentation protéique et calcique comprenant les composants suivants et possédant un pH situé dans la plage allant de 3 à 4 :
protéine ou son hydrolysat qui ne coagule pas à
un pH allant de 3 à 4 : 3 % à 8 % en poids
calcium : 0,1 % à 0,5 % en poids
acidulant : 0,5 % à 3 % en poids
glucide : 4 % à 20 % % en poids
matière grasse : 0 % à 5 % en poids
agent émulsifiant : 0 % à 0,5 % en poids
agar-agar : 0,1 % à 1 % en poids
eau : 65 % à 90 % en poids.

2. Composition sous forme de gel selon la revendication 1, comprenant en outre 0,1 % à 20 % en poids d'au moins un agent de masquage choisi dans le groupe constitué par les jus de fruits, le lait fermenté, une dextrine difficile à digérer, une dextrine réduite difficile à digérer, un nigéro-oligosaccharide et le tréhalose.

3. Composition sous forme de gel selon la revendication 1 ou 2, comprenant en outre de la vitamine D en une quantité de 0,1 x 10⁻⁶ à 10 x 10⁻⁶ % en poids.

4. Composition sous forme de gel selon l'une quelconque des revendications 1 à 3, dans laquelle la protéine qui ne coagule pas à un pH allant de 3 à 4 est au moins un élément choisi dans le groupe constitué par les concentrés de protéines lactosériques, les isolats de protéines lactosériques, le lactosérum dessalé et les hydrolysats de protéines possédant un poids moléculaire moyen en nombre allant de 500 à 10 000.

5. Composition sous forme de gel selon l'une quelconque des revendications 1 à 4, comprenant en outre de la gomme de guar ou de la gomme gellane en une quantité de 0,05 % à 0,3 % en poids.
